(19) Europäisches Patentamt
European Patent Office
Office européen des brevets

(11) **EP 3 976 339 B1**

(12) **EUROPEAN PATENT SPECIFICATION**

(45) Date of publication and mention
of the grant of the patent:
**13.11.2024 Bulletin 2024/46**

(51) International Patent Classification (IPC):
**B29C 48/05** (2019.01)    **B29B 9/06** (2006.01)

(21) Application number: **20730364.5**

(52) Cooperative Patent Classification (CPC):
**B29C 48/92; B29B 9/065; B29B 9/12;**
**B29C 48/0022; B29C 48/022; B29C 48/05;**
B29B 7/38; B29B 7/484; B29C 2948/92209;
B29C 2948/92285; B29K 2023/0625

(22) Date of filing: **15.05.2020**

(86) International application number:
**PCT/US2020/033109**

(87) International publication number:
**WO 2020/242789 (03.12.2020 Gazette 2020/49)**

(54) **METHOD OF EXTRUDING LINEAR LOW-DENSITY POLYETHYLENE (LLDPE) WITHOUT SURFACE FRACTURES IN THE MELT**

VERFAHREN ZUREXTRUSION VON LINEAR LOW DENSITY POLYETHYLEN (LLDPE) OHNE OBERFLÄCHENRISSE IN DER SCHMELZE

PROCÉDÉ DE LA EXTRUSION DE LINEAR LOW DENSITY POLYETHYLEN (LLDPE) SANS RUPTURE EN SURFACE DE LA FUSION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.05.2019 US 201962854493 P**

(43) Date of publication of application:
**06.04.2022 Bulletin 2022/14**

(73) Proprietor: **Dow Global Technologies LLC**
**Midland, MI 48674 (US)**

(72) Inventors:
• **ABE, Daudi A.**
**The Woodlands, Texas 77375 (US)**
• **LIU, Bo**
**Lake Jackson, Texas 77566 (US)**

(74) Representative: **Boult Wade Tennant LLP**
**Salisbury Square House**
**8 Salisbury Square**
**London EC4Y 8AP (GB)**

(56) References cited:
WO-A1-94/19168        WO-A2-93/08221
US-A1- 2005 074 609

• **MARZIEH EBRAHIMI ET AL: "Melt fracture of linear low-density polyethylenes: Die geometry and molecular weight characteristics", PHYSICS OF FLUIDS, vol. 30, no. 5, 1 May 2018 (2018-05-01), US, pages 053103, XP055722437, ISSN: 1070-6631, DOI: 10.1063/1.5029380**
• **E. C. ACHILLEOS ET AL: "Role of processing aids in the extrusion of molten polymers", JOURNAL OF VINYL AND ADDITIVE TECHNOLOGY, vol. 8, no. 1, 1 March 2002 (2002-03-01), US, pages 7 - 24, XP055571062, ISSN: 1083-5601, DOI: 10.1002/vnl.10340**

**Description**

FIELD

Extruding polyethylene and related aspects.

INTRODUCTION

Patents and patent application publications in or about the field include US2991508, US3920782, US4267146, US4282177, US4348349, US4360494, US4859398, US5089200, US5320798, US6017991, US6187397, US6552129, US6474969B1, and US7632086B2.

Problems of surface melt fracture have been attacked in a wide variety of ways. These include changing the design of the die, adding a polymer-processing aid to the melt, or maintaining temperature of the melt below a maximum value (e.g., less than about 200° C.). Another approach is maintaining the temperature of a die exit region of the die at a temperature above the bulk melt temperature of the polymer. For example, the temperature of the die exit region may be maintained at a temperature from 30° to 170° C. above the bulk melt temperature and a melt of a polymer extruded through the die at a shear rate of less than 1,000 s$^{-1}$ and a shear stress of about 0.4 MPa.

An article taken from Physics of Fluids vol. 30, no. 5, 1 May 2018, relates to the melt fracture of linear low density polyethylenes: Die Geometry and molecular weight characteristics.

WO-A-94/19168 relates to a method for producing a polyolefin extrudate substantially free from sharkskin melt fracture comprising the steps of: selecting a polyolefin having a molecular weight distribution less than 3.3 and a melt index less than 5 g/10 min; and extruding the polyolefin at a shear stress of less than 0.5 MPa, an extrusion temperature of less than 200 °C and at a shear rate at the end of the slipstick region of the polyolefin but less than 1000 sec$^{-1}$.

WO-A-93/08221 relates to elastic substantially linear olefin polymers. The polymers have processing indices (PI's) less than or equal to 70 percent of those of a comparative linear olefin polymer and a critical shear rate at onset of surface melt fracture of at least 50 percent greater than the critical shear rate at the onset of surface melt fracture of traditional linear olefin polymer at about the same $I_2$ and $M_w/M_n$. The polymers can also have from 0.01 to 3 long chain branches/1000 carbons along the polymer backbone and have higher low/zero shear viscosity and lower high shear viscosity than comparative linear olefin polymers. The polymers can also be characterized as having a melt flow ratio, $I_{10}/I_2 \geq 5.63$, a molecular weight distribution, $M_w/M_n$, defined by the equation: $M_w/M_n \leq (I_{10}/I_2) - 4.63$, and a critical shear stress at onset of gross melt fracture greater than $4 \times 10^6$ dyne/cm$^2$.

US-A-2005/074609 discloses that melt fracture is reduced, without the necessity of polymer processing-aid additives specifically designed to alleviate exit region surface melt fracture phenomenon, by heating at least a portion of the die through which the polymer is extruded. The die exit region is maintained at a temperature above the bulk melt temperature of the polymer extruded through the die exit hole.

US5320798 to Chambon et al. mentions that certain polyethylenes experience surface melt deformations as independent functions of shear rate and shear stress of a melt of the polyethylene being extruded through a die of an extruder to make form polyethylene pellets. The higher the shear rate and/or shear stress becomes, the more pronounced the problems with extrudate surface. With increasing shear rate of a polymer extruded through the die, several transitions occur. At low shear rate (e.g., less than 1,000 s$^{-1}$) the extrudate is smooth. With increasing shear rate the extrudate surface becomes matt, then deformed, giving a "shark skin" surface. At high shear rates, typically greater than 1,000 per second, even greater than 2,000 s$^{-1}$, the "shark skin" region on an HDPE (high-density polyethylene) extrudate experiences a "slipstick transition" where it converts to a slip or fast-moving wavy extrudate surface. Chambon et al. believed that LDPE (low-density polyethylene) does undergo a typical slipstick transition, and if it does, it is greatly above a shear rate of 2,000 s$^{-1}$. When the shear stress exceeds about 0.2 MPa, the extrudate surface problems worsen. At a shear stress of 0.5 MPa or higher, surface melt fracture gives an extrudate surface that is wavy and distorted.

The structure, composition, and rheological (melt flow) properties of low-density polyethylene (LDPE) are distinct from those of linear low-density polyethylene (LLDPE). As for structural differences, LDPE has long chain branches, whereas LLDPE is substantially free of long chain branches. LLDPE has a substantial number of short chain branches, whereas LDPE has fewer short chain branches. As for composition, LDPE has a relatively broader molecular weight distribution (greater $M_w/M_n$ value), whereas LLDPE has a narrower molecular weight distribution (lesser $M_w/M_n$ value). These structural and compositional differences result in the rheological (melt flow) properties of LDPE being significantly different from those of LLDPE. Thus, surface melt fracture performance of LLDPE is not predictable from surface melt fracture performance of LDPE.

SUMMARY

We discovered a problem with surface melt fracture of linear low-density polyethylene (LLDPE). We found that LLDPE undergoes a slipstick transition and converts to a slip or fast-moving wavy extrudate surface at shear rates above 2,000 per second ($s^{-1}$) and shear stress about 0.2 megapascal (MPa). Surprisingly, however, at shear stress above 0.4 MPa, even above 0.5 MPa, and at shear rates above 1,100 $s^{-1}$, the problem did not worsen. In the latter higher-energy shear-stress regime a smooth surface LLDPE extrudate without surface melt fracture (SMF) unexpectedly forms.

We provide a method of extruding a melt of a linear low-density polyethylene (LLDPE) without surface melt fracture. The method comprises heating a melt of the LLDPE to a temperature from 190.0 to 260.0 degrees Celsius; and extruding through a die the heated melt at a shear rate of from 1,100 to 7,000 per second and at a shear stress of greater than 0.40 megapascal, thereby forming a polyethylene extrudate without surface melt fracture.

BRIEF DESCRIPTION OF THE DRAWING(S)

Figure (FIG.) 1: black-and-white photograph of a comparative LLDPE extrudate strand produced at comparative low shear rate values (less than 1,000 $s^{-1}$) and low shear stress values (less than 0.3 MPa). The strand has a smooth surface consistent with absence of surface melt fracture.

FIG. 2: black-and-white photograph of a comparative LLDPE extrudate strand produced at comparative medium shear rate values (1,000 to 2,500 $s^{-1}$) and medium shear stress values (0.3 to 0.4 MPa). The strand has a rough, irregular surface resulting from surface melt fracture.

FIG. 3: black-and-white photograph of an inventive LLDPE extrudate strand produced at inventive high shear rate values (2,601 to 7,000 $s^{-1}$) and high shear stress values (0.41 to 0.6 MPa). The strand has a smooth surface consistent with absence of surface melt fracture.

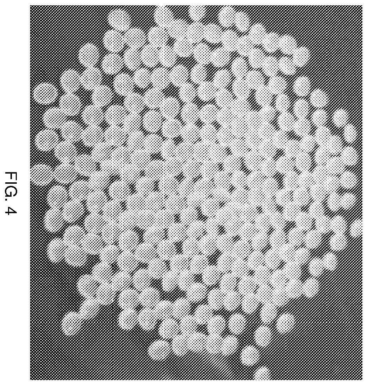

FIG. 4: black-and-white photograph of inventive LLDPE extrudate pellets produced at medium shear rate values (1,000 to 2,500 $s^{-1}$) and inventive high shear stress values (0.41 to 0.6 MPa). The pellets have smooth surfaces consistent with absence of surface melt fracture.

DETAILED DESCRIPTION

Provided is a method of extruding a melt of a linear low-density polyethylene (LLDPE) without surface melt fracture. Some aspects of the method are numbered for easy reference.

Aspect 1. A method of extruding a melt of a linear low-density polyethylene (LLDPE) so as to form an LLDPE extrudate without surface melt fracture, the method comprising heating a melt of the linear low-density polyethylene to a temperature from 190.0 to 260.0 degrees Celsius (° C.); and extruding through a die the heated melt at a shear rate of from 1,101 to 7,000 per second ($s^{-1}$) and at a shear stress of greater than 0.41 megapascal (MPa), thereby forming a linear low-density polyethylene extrudate without surface melt fracture.

Aspect 2. The method of aspect 1 wherein the temperature of the melt of the LLDPE is selected from: 190.0° to 226.0° C.; 206° to 234.0° C.; and 226° to 254° C.

Aspect 3. The method of aspect 1 or 2 wherein the shear rate is selected from: 1,210 to 1,840 $s^{-1}$; 1,850 to 2,500 $s^{-1}$; 2,650 to 4,490 $s^{-1}$; and 4,500 to 6,900 $s^{-1}$.

Aspect 4. The method of any one of aspects 1 to 3 wherein the shear stress is selected from: 0.43 to 0.49, 0.44 to 0.55, 0.56 to 0.70 MPa; and 0.71 to 1.0 MPa.

Aspect 5. The method of any one of aspects 1 to 4 characterized by any one of limitations (i) to (iv): (i) the temperature of the LLDPE melt is from 190.0° to 226° C., the shear rate is from 1,201 to 1,830 $s^{-1}$, and the shear stress is from 0.47 to 0.49 MPa; (ii) the temperature of the LLDPE melt is from 206° to 214° C., the shear rate is from 3,601 to 4,500 $s^{-1}$, and the shear stress is from 0.47 to 0.55 MPa; (iii) the temperature of the LLDPE melt is from 226° to 234° C., the shear rate is from 3,201 to 3,500 $s^{-1}$, and the shear stress is from 0.47 to 0.53 MPa; (iv) the temperature of the LLDPE melt is from 246° to 254° C., the shear rate is from 2,601 to 3,600 $s^{-1}$, and the shear stress is from 0.44 to 0.57 MPa.

Aspect 6. The method of any one of aspects 1 to 5 wherein (i) the die is maintained at a temperature from 140° to 240.0° C.; (ii) the die hole has a diameter from 0.5 to 1.4 millimeters (mm); or (iii) both (i) and (ii).

Aspect 7. The method of any one of aspects 1 to 5 wherein the LLDPE is characterized by any one of limitations (a) to (e): (a) a melt index ($I_2$, 190° C., 2.16 kg) from 0.5 to 1.4 grams per 10 minutes (g/10 min.), alternatively from 0.9 to 1.1 g/10 min.; (b) a molecular weight distribution ($M_w/M_n$) from 2.3 to 4.4, alternatively from 2.3 to 2.7, alternatively from 3.5 to 4.4; (c) both (a) and (b); (d) long chain branching characterized by less than 0.008 long chain branches (LCB) per 1,000 carbon atoms; and (e) both (d) and any one of (a) to (c). The $M_w$ is weight-average molecular weight and the $M_n$ is number average molecular weight and the ratio $M_w/M_n$ is also called molecular mass distribution. The melt index is determined by the melt index described later and the $M_w$ and $M_n$ are determined by the GPC method described later. The LCB is measured according to the Zimm-Stockmayer approach mentioned in US 9273170 B2, column 45, lines 14 to 44.

Aspect 8. The method of any one of aspects 1 to 7 further comprising cutting the LLDPE extrudate into pellets having surfaces without surface melt fracture. The method may further comprise pelletizing the LLDPE extrudate underwater to make pellets of the LLDPE without surface melt fracture. The method may further comprise drying the LLDPE pellets to remove water therefrom. Another advantage is that the LLDPE pellets formed by the method may have a decreased amount or be free of fines.

In some aspects the method may be characterized by a relationship between the shear stress and the shear rate. The relationship may be defined according to mathematical equation (I): shear stress > 50*(1/(shear rate)) + q (I); wherein q is 0.35, alternatively 0.40; and wherein > means greater than, * means multiplication, / means division, and + means addition. In some aspects q is at most 0.60.

A surface of an LLDPE extrudate having a surface melt fracture (SMF) may be described as a rough ridge-like irregular surface. These imperfections develop when a polymer extrudate passes through a die hole under certain conditions. The extrudate surface imperfections are discernable with the naked human eye.

A surface of an LLDPE extrudate having a smooth surface free of surface melt fracture (SMF) may be described as a LLDPE extrudate that, after having passed through a die hole, does not show any discernable surface imperfections when viewed with the naked human eye.

The inventive shear rate range is considered to be medium (1,000 to 2,500 s$^{-1}$) or high (2,500 to 7,000 s$^{-1}$) relative to conventional shear rates. The inventive shear stress range ($\geq$ 0.41 MPa, e.g., from 0.41 to 0.60) is high relative to conventional shear stresses.

The method may be carried out using any suitable machine for extruding a melt of LLDPE through a die hole. Examples of suitable machines are extruders and capillary rheometers. The extruder may be any device useful for extruding polyethylene. The extruder may further comprise an underwater pelletizer device for pelletizing extruded polyethylene underwater. The extruder/underwater pelletizer assembly may be a twin-screw extruder machine available from COPERION Corporation.

The method is effective for avoiding surface melt fracture of LLDPE extrudates without changing die design, adding a polymer-processing aid to the LLDPE melt, suppressing melt temperature, or controlling temperature of the die exit region.

The presence or absence of surface melt fracture on the LLDPE extrudate may be determined using the Surface Melt Fracture Test Method described later.

"Extrudate" generally means a material that has been extruded through a die. The extrudate may be in form of a liquid (melt), paste (partially solidified melt), or a solid. The solid is made by a subsequent step of cooling the melt.

The LLDPE extrudate is a linear low-density polyethylene material that has been extruded through a die. The LLDPE extrudate may be in the form of a liquid (melt), paste, or a solid made by a subsequent step of cooling the extrudate. The LLDPE extrudate, and the LLDPE melt from which it has been formed, may be free of additives. Alternatively, the LLDPE extrudate, and the LLDPE melt from which it has been formed, may optionally contain one or more additives. Examples of such additives are antioxidants, colorants (e.g., carbon black), fillers (e.g., hydrophobic-surface treated fumed silica), and stabilizers (e.g., hindered amine stabilizer that protects the LLDPE against effects of ultraviolet light). The additive(s), when present, independently may be from 0.01 to 5 weight percent (wt%) (e.g., stabilizers and antioxidants) or from 5 to 75 wt% (fillers and colorants) of the LLDPE extrudate, and the LLDPE melt from which it has been formed, depending upon the additive. The LLDPE extrudate may be free of other polyolefin polymers such as LDPE, medium density polyethylene, high density polyethylene, ethylene/unsaturated carboxylic ester copolymers, and polypropylenes. The LLDPE extrudate may be free of non-polyolefin polymers such as polystyrenes, alkyl nitrile rubbers, polyesters, and polyamides.

General definitions: Alternatively precedes a distinct embodiment. Ambient or room temperature: 23° C. $\pm$ 1° C. unless indicated otherwise. Aspects: embodiments of invention. Include numbered and unnumbered aspects. ASTM: standards organization, ASTM International, West Conshohocken, Pennsylvania, USA. Comparative examples are used for comparisons and are not to be deemed prior art. Free of or lacks means a complete absence of; alternatively, not detectable. IUPAC is International Union of Pure and Applied Chemistry (IUPAC Secretariat, Research Triangle Park, North Carolina, USA). May confers a permitted choice, not an imperative. Operative: functionally capable or effective. Optional(ly): is absent (or excluded), alternatively is present (or included). Ranges: include endpoints, subranges, and whole and/or fractional values subsumed therein, except a range of integers does not include fractional values.

Density: measured according to ASTM D792-13, *Standard Test Methods for Density and Specific Gravity (Relative Density) of Plastics by Displacement,* Method B (for testing solid plastics in liquids other than water, e.g., in liquid 2-propanol). Units of grams per cubic centimeter (g/cm$^3$).

Gel permeation chromatography (GPC) Test Method: Weight-Average Molecular Weight Test Method: determine $M_w$, number-average molecular weight ($M_n$), and $M_w/M_n$ using chromatograms obtained on a High Temperature Gel Permeation Chromatography instrument (HTGPC, Polymer Laboratories). The HTGPC is equipped with transfer lines, a differential refractive index detector (DRI), and three Polymer Laboratories PLgel 10$\mu$m Mixed-B columns, all contained in an oven maintained at 160° C. Method uses a solvent composed of BHT-treated TCB at nominal flow rate of 1.0 milliliter per minute (mL/min.) and a nominal injection volume of 300 microliters ($\mu$L). Prepare the solvent by dissolving 6 grams of butylated hydroxytoluene (BHT, antioxidant) in 4 liters (L) of reagent grade 1,2,4-trichlorobenzene (TCB), and filtering the resulting solution through a 0.1 micrometer ($\mu$m) Teflon filter to give the solvent. Degas the solvent with an inline degasser before it enters the HTGPC instrument. Calibrate the columns with a series of monodispersed polystyrene (PS) standards. Separately, prepare known concentrations of test polymer dissolved in solvent by heating known amounts thereof in known volumes of solvent at 160° C. with continuous shaking for 2 hours to give solutions. (Measure all quantities gravimetrically.) Target solution concentrations, c, of test polymer of from 0.5 to 2.0 milligrams polymer per milliliter solution (mg/mL), with lower concentrations, c, being used for higher molecular weight polymers. Prior to running each sample, purge the DRI detector. Then increase flow rate in the apparatus to 1.0 mL/min/, and allow the DRI detector to stabilize for 8 hours before injecting the first sample. Calculate $M_w$ and $M_n$ using universal calibration relationships with the column calibrations. Calculate MW at each elution volume with following equation:

$$\log M_X = \frac{\log(K_X / K_{PS})}{a_X + 1} + \frac{a_{PS} + 1}{a_X + 1} \log M_{PS}$$

,

sample, subscript "PS" stands for PS standards, $a_{PS} = 0.67$ , $K_{PS} = 0.000175$, and $a_X$ and $K_X$ are obtained from published literature. For polyethylenes, $a_X/K_X = 0.695/0.000579$. For polypropylenes $a_X/K_X = 0.705/0.0002288$. At each point in the resulting chromatogram, calculate concentration, c, from a baseline-subtracted DRI signal, $I_{DRI}$, using the following equation: $c = K_{DRI}I_{DRI}/(dn/dc)$, wherein $K_{DRI}$ is a constant determined by calibrating the DRI, / indicates division, and dn/dc is the refractive index increment for the polymer. For polyethylene, dn/dc = 0.109. Calculate mass recovery of polymer from the ratio of the integrated area of the chromatogram of concentration chromatography over elution volume and the injection mass which is equal to the pre-determined concentration multiplied by injection loop volume. Report all molecular weights in grams per mole (g/mol) unless otherwise noted. Further details regarding methods of determining Mw, Mn, MWD are described in US 2006/0173123 page 24-25, paragraphs [0334] to [0341]. Plot of dW/dLog(MW) on the y-axis versus Log(MW) on the x-axis to give a GPC chromatogram, wherein Log(MW) and dW/dLog(MW) are as defined above.

Long Chain Branching (LCB) Test Method: LCB is measured according to the Zimm-Stockmayer approach mentioned in US 9273170 B2, column 45, lines 14 to 44.

Melt Index ("$I_2$"): measured according to ASTM D1238-13, using conditions of 190° C./2.16 kg, formerly known as "Condition E". Units of grams per 10 minutes (g/10 min.).

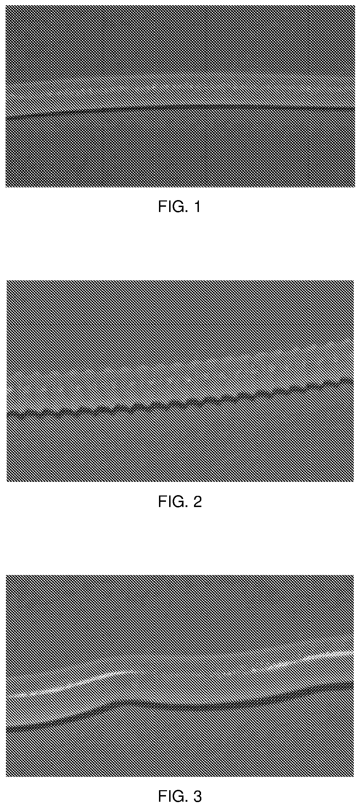

Surface Melt Fracture Test Method: used an extrusion operation system comprising a extruder machine and a capillary rheometer instrument to demonstrate surface melt fracture and determine under which shear stress conditions the surface melt fracture occurred with LLDPE. The extrusion operation system comprised a feed system for feeding relative amounts of LLDPE and additive components to an extruder. The extruder melted the LLDPE, mixed the resulting molten LLDPE and additives together, and conveyed the LLDPE-additives melt-mixture through a melt pump, a screen changer, past a divert valve system, and then into a die plate holder. The die plate holder distributed the LLDPE-additives melt-mixture to die holes of a die. The LLDPE-additives melt-mixture exited the die holes as a strand of molten LLDPE extrudate. The strand of molten LLDPE extrudate is directed into a water bath where it is cooled and solidified. The solidified strand is sampled (a length of the solid strand is cut out), and the sample is characterized for presence or absence of gross surface imperfections, which are caused by surface melt fracture. This method was used to make the strands shown in FIG.s 1 to 3. The remaining solidified strand of LLDPE extrudate may be cut using an underwater pelleting system into pellets. The surface of the strands or pellets may be characterized as "smooth" or as "rough" or "irregular". Smooth means no gross surface imperfections such as ridges are visible to the naked human eye, and thus no surface melt fracture occurred. The surfaces shown in FIG.s 1, 3 and 4 are smooth. Rough or irregular means gross surface imperfections such as ridges are visible to the naked human eye, and thus surface melt fracture has occurred. The surface shown in FIG. 2 is rough or irregular.

In another aspect the LLDPE-additives melt-mixture extrudate that exits the die is directly cut using an underwater pelletizer into pellets.

In another aspect the LLDPE-additives melt-mixture extrudate that exits the die is cut as a hot melt and flung into a cooling water bath.

In another aspect the LLDPE-additives melt-mixture extrudate is shaped into a fabricated product such as film.

EXAMPLES

The resins used to study surface melt fracture were a Ziegler-Natta (ZN) catalyst-made linear low-density polyethylene ("LLDPE-ZN") and a metallocene (MCN)-catalyst-made linear low-density polyethylene ("LLDPE-MCN").

Table 1 lists resin properties and the different shear stress conditions (temperatures and shear rates) that were used. Collected LLDPE extrudate samples at each of these shear stress conditions, and analyzed and evaluated them for the presence of surface irregularity or occurrence of surface melt fracture. The resins, their melt index and Mw/Mn, and ranges of the extrusion conditions used in comparative and inventive examples are reported in Table 1.

Table 1: Resins and extrusion conditions used in comparative or inventive examples.

| Resin | LLDPE-ZN | LLDPE-MCN |
|---|---|---|
| Polyethylene $I_2$ (190° C., 2.16 kg) (g/10 min.) | 1.0 | 1.0 |
| Polyethylene $M_w/M_n$ (GPC) | 4.0 | 2.5 |
| Capillary Die Diameter (mm) | 1.0 | 1.0 |
| Melt temperatures Used (° C.) | 210, 230, 250 | 210, 230, 250 |
| Shear rates Used ($s^{-1}$) | 30 to 4,500 | 30 to 4,500 |
| Shear stresses Used (MPa) | 0.25 to 0.54 | 0.25 to 0.54 |
| Form of Final Product Made | Pellets | Pellets |

Using the foregoing materials and Surface Melt Fracture Test Method, studies of surface melt fracture were conducted in two parts: 1. Production of LLDPE strands and 2. Production of LLDPE pellets.

Part 1: Production of LLDPE strands. Comparative Examples 1 to 7 (CE1 to CE7) and Inventive Examples 1 to 6 (IE1 to IE6).

Comparative Example 1 (CE1): production of a comparative LLDPE extrudate under conventional low shear rates (less than 1,000 $s^{-1}$) and low shear stresses (less than 0.3 MPa). In CE1, a melt of the LLDPE-MCN polymer at a temperature of 210° C. was extruded at a shear rate of 120 $s^{-1}$, and a shear stress of 0.258 MPa. The comparative LLDPE extrudate of CE1 is solidified as a strand and its surface is characterized as shown in the black-and-white photograph of FIG. 1. As can be seen with the naked human eye, the comparative extrudate has a smooth surface consistent with absence of surface melt fracture. See Table 2 for tabular results.

Comparative Example 2 (CE2): production of a comparative LLDPE extrudate under medium shear rates (1,000 to 2,500 $s^{-1}$) and medium shear stresses (0.3 to 0.4 MPa). In CE2, a melt of the LLDPE-MCN polymer at a temperature of 210° C. was extruded at a shear rate was 281 $s^{-1}$, and the shear stress was 0.364 MPa. The comparative LLDPE extrudate of CE2 is solidified as a strand and its surface is characterized as shown in the black-and-white photograph of FIG. 2. As can be seen with the naked human eye, the comparative extrudate has a rough, irregular surface resulting from surface melt fracture during the extrusion. See Table 2 for tabular results.

Comparative Examples 3 to 7 (CE3 to CE7): replicate the procedure of CE2 except use the LLDPE, melt temperature, medium shear rate values, and medium shear stress values shown in Table 2.

Table 2: Comparative Examples 1 to 7: strands made at either low shear rate/low shear stress (CE1), low shear rate/ medium shear stress (CE2 to CE6), or medium shear rate/medium shear stress (CE7).

| Ex. No. | Resin | Melt Temp. (° C.) | Shear Rate ($s^{-1}$) | Shear Stress (MPa) | Strand Surface; conclusion |
|---|---|---|---|---|---|
| CE1 | LLDPE-MCN | 210 | 120 | 0.258 | Smooth (FIG. 1); no surface melt fracture. |
| CE2 | LLDPE-MCN | 210 | 281 | 0.364 | Gross imperfections (FIG. 2); surface melt fractured. |
| CE3 | LLDPE-MCN | 230 | 255 | 0.311 | Gross imperfections similar to FIG. 2; surface melt fractured. |
| CE4 | LLDPE-MCN | 250 | 555 | 0.379 | Gross imperfections similar to FIG. 2; surface melt fractured. |
| CE5 | LLDPE-ZN | 210 | 598 | 0.328 | Gross imperfections similar to FIG. 2; surface melt fractured. |

(continued)

| Ex. No. | Resin | Melt Temp. (°C.) | Shear Rate (s$^{-1}$) | Shear Stress (MPa) | Strand Surface; conclusion |
|---|---|---|---|---|---|
| CE6 | LLDPE-ZN | 230 | 883 | 0.342 | Gross imperfections similar to FIG. 2; surface melt fractured. |
| CE7 | LLDPE-ZN | 250 | 1,158 | 0.345 | Gross imperfections similar to FIG. 2; surface melt fractured. |

The comparative data in Table 2 are discussed later.

Inventive Example 1 (IE1): production of an inventive LLDPE extrudate under inventive high shear rate values (2,601 to 7,000 s$^{-1}$) and high shear stress values (0.41 to 0.6 MPa). In IE1, a melt of the LLDPE-MCN polymer at a temperature of 210° C. was extruded at a shear rate was 3,777 s$^{-1}$, and the shear stress was 0.539 MPa. The inventive LLDPE extrudate of IE1 is solidified as a strand and its surface is characterized as shown in the black-and-white photograph of FIG. 3. As can be seen with the naked human eye, the inventive extrudate has a smooth surface consistent with absence of surface melt fracture. This result is unexpected in view of the prior art, as shown by comparison to CE2. See Table 3 for tabular results.

Inventive Examples 2 to 6 (IE2 to IE6): replicate the procedure of IE1 except use the LLDPE, melt temperature, high shear rates, and high shear stresses shown in Table 3.

Table 3: Inventive Examples 1 to 6: strands made at high shear rate/high shear stress.

| Ex. No. | Resin | Melt Temp. (°C.) | Shear Rate (s$^{-1}$) | Shear Stress (MPa) | Strand Surface; conclusion |
|---|---|---|---|---|---|
| IE1 | LLDPE-MCN | 210 | 3,777 | 0.539 | Smooth (FIG. 3); no melt fracture. |
| IE2 | LLDPE-MCN | 230 | 3,312 | 0.522 | Smooth similar to FIG. 3; no surface melt fracture. |
| IE3 | LLDPE-MCN | 250 | 3,503 | 0.564 | Smooth similar to FIG. 3; no surface melt fracture. |
| IE4 | LLDPE-ZN | 210 | 4,431 | 0.478 | Smooth similar to FIG. 3; no surface melt fracture. |
| IE5 | LLDPE-ZN | 230 | 3,483 | 0.474 | Smooth similar to FIG. 3; no surface melt fracture. |
| IE6 | LLDPE-ZN | 250 | 2,682 | 0.444 | Smooth similar to FIG. 3; no surface melt fracture. |

Comparing the comparative data in Table 2 with the inventive data in Table 3, a LLDPE extrudate strand of LLDPE undergoes a slipstick transition and converts to a slip or fast-moving wavy extrudate surface (surface melt fractured) at shear rates above 200 s$^{-1}$ when shear stress is less than 0.4 MPa (Table 2). However, at high shear rates above 2,500 s$^{-1}$ and at high shear stress above 0.4 MPa, instead of the problem worsening further, an inventive smooth surface polyethylene extrudate strand without surface melt fracture (SMF) is surprisingly and beneficially formed (Table 3).

Part 2: Production of LLDPE pellets. Inventive Examples 7 to 9 (IE7 to IE9).

Inventive Examples 7 to 9 (IE7 to IE9): production of inventive LLDPE extrudates under inventive medium shear rates (1,000 to 2,500 s$^{-1}$) and high shear stresses (0.41 to 0.6 MPa). Replicate the procedure of IE1 except use the LLDPE, melt temperature, high shear rate values, and high shear stress values and directly cut the molten LLDPE extrudate that exits the die using an underwater pelletizer into pellets. Characterize the surfaces of the LLDPE pellets. Results are reported in Table 4.

Table 4: Inventive Examples 7 to 9: pellets made at medium shear rate/high shear stress.

| Ex. No. | Resin | Melt Temp. (° C.) | Shear Rate (s$^{-1}$) | Shear Stress (MPa) | Pellets Surface; conclusion |
|---------|-------|-------------------|----------------------|--------------------|-----------------------------|
| IE7 | LLDPE-ZN | 225 | 1,827 | 0.472 | Smooth (see FIG. 4); no surface melt fracture. |
| IE8 | LLDPE-ZN | 207 | 1,730 | 0.486 | Smooth similar to FIG. 4; no surface melt fracture. |
| IE9 | LLDPE-ZN | 192 | 1,275 | 0.482 | Smooth similar to FIG. 4; no surface melt fracture. |

Comparing the comparative data in Table 2 with the inventive data in Table 4, an extrudate of LLDPE undergoes a slipstick transition and converts to a slip or fast-moving wavy extrudate surface (surface melt fractured) at shear rates above 200 s$^{-1}$ when shear stress is less than 0.4 MPa (Table 2). However, at medium shear rates (1,000 to 2,500 s$^{-1}$) or high shear rates (2,600 to 5,000 s$^{-1}$) and high shear stresses greater than 0.4 MPa, instead of the problem worsening further, an inventive smooth surface polyethylene extrudate pellets without surface melt fracture (SMF) are beneficially formed (Table 4).

**Claims**

1.    A method of extruding a melt of a linear low-density polyethylene (LLDPE) so as to form an LLDPE extrudate without surface melt fracture, the method comprising heating a melt of the polyethylene to a temperature from 190.0 to 260.0 degrees Celsius (° C.); and extruding through a die the heated melt at a shear rate of from 1,101 to 7,000 per second (s$^{-1}$) and at a shear stress of greater than 0.41 megapascal (MPa), thereby forming a linear low-density polyethylene extrudate without surface melt fracture; and cutting the LLDPE extrudate into pellets having surfaces without surface melt fracture, wherein the die hole has a diameter from 0.5 to 1.4 millimeters (mm).

2.    The method of claim 1 wherein the temperature of the melt of the linear low-density polyethylene is selected from: 190.0° to 226.0° C.; 206° to 234.0° C.; and 226° to 254° C.

3.    The method of claim 1 or 2 wherein the shear rate is selected from: 1,210 to 1,840 s$^{-1}$; 1,850 to 2,500 s$^{-1}$; 2,650 to 4,490 s$^{-1}$; and 4,500 to 6,900 s$^{-1}$.

4.    The method of any one of claims 1 to 3 wherein the shear stress is selected from: 0.43 to 0.49, 0.44 to 0.55, 0.56 to 0.70 MPa; and 0.71 to 1.0 MPa.

5.    The method of any one of claims 1 to 4 **characterized by** any one of limitations (i) to (iv): (i) the temperature of the melt of the LLDPE is from 190.0° to 226° C., the shear rate is from 1,201 to 1,830 s$^{-1}$, and the shear stress is from 0.47 to 0.49 MPa; (ii) the temperature of the melt of the LLDPE is from 206° to 214° C., the shear rate is from 3,601 to 4,500 s$^{-1}$, and the shear stress is from 0.47 to 0.55 MPa; (iii) the temperature of the melt of the LLDPE is from 226° to 234° C., the shear rate is from 3,201 to 3,500 s$^{-1}$, and the shear stress is from 0.47 to 0.53 MPa; (iv) the temperature of the melt of the LLDPE is from 246° to 254° C., the shear rate is from 2,601 to 3,600 s$^{-1}$, and the shear stress is from 0.44 to 0.57 MPa.

6.    The method of any one of claims 1 to 5 wherein the die is maintained at a temperature from 140° to 240.0° C.

7.    The method of any one of claims 1 to 6 wherein the linear low-density polyethylene is **characterized by** any one of limitations (a) to (e): (a) a melt index ($I_2$, 190° C., 2.16 kg) from 0.5 to 1.4 grams per 10 minutes (g/10 min.); (b) a molecular weight distribution ($M_w/M_n$) from 2.3 to 4.4; (c) both (a) and (b); (d) long chain branching **characterized by** less than 0.008 long chain branches per 1,000 carbon atoms; and (e) both (d) and any one of (a) to (c).

8.    The method of any one of claims 1 to 7 wherein the cutting the LLDPE extrudate into pellets having surfaces without surface melt fracture comprises pelletizing the LLDPE extrudate underwater to make pellets of the LLDPE without surface melt fracture.

**Patentansprüche**

1. Verfahren zum Extrudieren einer Schmelze aus linearem Polyethylen niedriger Dichte (LLDPE), um ein LLDPE-Extrudat ohne Oberflächenschmelzbruch zu bilden, wobei das Verfahren das Erhitzen einer Schmelze des Polyethylens auf eine Temperatur von 190,0 bis 260,0 Grad Celsius (°C) umfasst; und Extrudieren der erhitzten Schmelze durch eine Düse bei einer Scherrate von 1.101 bis 7.000 pro Sekunde (s$^{-1}$) und bei einer Scherspannung von mehr als 0,41 Megapascal (MPa), wodurch ein lineares Extrudat aus Polyethylen niedriger Dichte ohne Oberflächenschmelzbruch entsteht; und Schneiden des LLDPE-Extrudats in Pellets mit Oberflächen ohne Oberflächenschmelzbruch, wobei die Düsenöffnung einen Durchmesser von 0,5 bis 1,4 Millimeter (mm) aufweist.

2. Verfahren nach Anspruch 1, wobei die Temperatur der Schmelze des linearen Polyethylens niedriger Dichte ausgewählt ist aus: 190,0 °C bis 226,0 °C; 206 °C bis 234,0 °C; und 226 °C bis 254 °C.

3. Verfahren nach Anspruch 1 oder 2, wobei die Scherrate ausgewählt ist aus: 1.210 bis 1.840 s$^{-1}$, 1.850 bis 2.500 s$^{-1}$, 2.650 bis 4.490 s$^{-1}$, und 4.500 bis 6.900 s$^{-1}$.

4. Verfahren nach einem der Ansprüche 1 bis 3, wobei die Scherspannung ausgewählt ist aus: 0,43 bis 0,49, 0,44 bis 0,55, 0,56 bis 0,70 MPa; und 0,71 bis 1,0 MPa.

5. Verfahren nach einem der Ansprüche 1 bis 4, **gekennzeichnet durch** eine beliebige von Einschränkungen (i) bis (iv): (i) die Temperatur der LLDPE-Schmelze beträgt 190,0 °C bis 226 °C, die Scherrate beträgt 1.201 bis 1.830 s$^{-1}$, und die Scherspannung beträgt 0,47 bis 0,49 MPa; (ii) die Temperatur der LLDPE-Schmelze beträgt 206 bis 214 °C, die Scherrate beträgt 3.601 bis 4.500 s$^{-1}$, und die Scherspannung beträgt 0,47 bis 0,55 MPa; (iii) die Temperatur der LLDPE-Schmelze beträgt 226 bis 234 °C, die Scherrate beträgt 3.201 bis 3.500 s$^{-1}$ und die Scherspannung beträgt 0,47 bis 0,53 MPa; (iv) die Temperatur der LLDPE-Schmelze beträgt 246 bis 254 °C, die Scherrate beträgt 2.601 bis 3.600 s$^{-1}$ und die Scherspannung beträgt 0,44 bis 0,57 MPa.

6. Verfahren nach einem der Ansprüche 1 bis 5, wobei die Düse bei einer Temperatur von 140 °C bis 240 °C betrieben wird.

7. Verfahren nach einem der Ansprüche 1 bis 6, wobei das lineare Polyethylen niedriger Dichte **gekennzeichnet ist durch** eine beliebige der Beschränkungen (a) bis (e): (a) einen Schmelzindex (I$_2$, 190 °C, 2,16 kg) von 0,5 bis 1,4 Gramm pro 10 Minuten (g/10 min); (b) eine Molekulargewichtsverteilung (M$_w$/M$_n$) von 2,3 bis 4,4; (c) sowohl (a) als auch (b); (d) Langkettenverzweigung **gekennzeichnet durch** weniger als 0,008 Langkettenverzweigungen pro 1.000 Kohlenstoffatome; und (e) sowohl (d) als auch einer der Punkte (a) bis (c).

8. Verfahren nach einem der Ansprüche 1 bis 7, wobei das Schneiden des LLDPE-Extrudats in Pellets mit Oberflächen ohne Oberflächenschmelzbruch das Pelletieren des LLDPE-Extrudats unter Wasser umfasst, um Pellets aus dem LLDPE ohne Oberflächenschmelzbruch herzustellen.

**Revendications**

1. Procédé d'extrusion d'une masse fondue d'un polyéthylène basse densité linéaire (LLDPE) de manière à former un extrudat de LLDPE sans marques de coulée superficielles, le procédé comprenant le chauffage d'une masse fondue du polyéthylène à une température allant de 190,0 à 260,0 degrés Celsius (°C.) ; et l'extrusion à travers une filière de la masse fondue chauffée à un taux de cisaillement allant de 1 101 à 7 000 par seconde (s$^{-1}$) et à une contrainte de cisaillement supérieure à 0,41 mégapascal (MPa), permettant ainsi de former un extrudat de polyéthylène basse densité linéaire sans marques de coulée superficielles ; et le découpage de l'extrudat de LLDPE en granulés ayant des surfaces sans marques de coulée superficielles, dans lequel le trou de filière a un diamètre allant de 0,5 à 1,4 millimètre (mm).

2. Procédé selon la revendication 1, dans lequel la température de la masse fondue du polyéthylène basse densité linéaire est choisie parmi : 190,0° à 226,0 °C. ; 206° à 234,0 °C. ; et 226° à 254 °C.

3. Procédé selon la revendication 1 ou 2, dans lequel le taux de cisaillement est choisi parmi : 1 210 à 1 840 s$^{-1}$ ; 1 850 à 2 500 s$^{-1}$ ; 2 650 à 4 490 s$^{-1}$ ; et 4 500 à 6 900 s$^{-1}$.

**4.** Procédé selon l'une quelconque des revendications 1 à 3, dans lequel la contrainte de cisaillement est choisie parmi : 0,43 à 0,49, 0,44 à 0,55, 0,56 à 0,70 MPa ; et 0,71 à 1,0 MPa.

**5.** Procédé selon l'une quelconque des revendications 1 à 4, **caractérisé par** l'une quelconque des limitations (i) à (iv) : (i) la température de la masse fondue du LLDPE va de 190,0° à 226 °C., le taux de cisaillement va de 1 201 à 1 830 s$^{-1}$, et la contrainte de cisaillement va de 0,47 à 0,49 MPa ; (ii) la température de la masse fondue du LLDPE va de 206° à 214 °C., le taux de cisaillement va de 3 601 à 4 500 s$^{-1}$, et la contrainte de cisaillement va de 0,47 à 0,55 MPa ; (iii) la température de la masse fondue du LLDPE va de 226° à 234 °C., le taux de cisaillement va de 3 201 à 3 500 s$^{-1}$, et la contrainte de cisaillement va de 0,47 à 0,53 MPa ; (iv) la température de la masse fondue du LLDPE va de 246° à 254 °C., le taux de cisaillement va de 2 601 à 3 600 s$^{-1}$, et la contrainte de cisaillement va de 0,44 à 0,57 MPa.

**6.** Procédé selon l'une quelconque des revendications 1 à 5, dans lequel la filière est maintenue à une température allant de 140° à 240,0 °C.

**7.** Procédé selon l'une quelconque des revendications 1 à 6, dans lequel le polyéthylène basse densité linéaire est **caractérisé par** l'une quelconque des limitations (a) à (e) : (a) un indice de fusion ($I_2$, 190 °C., 2,16 kg) allant de 0,5 à 1,4 gramme pour 10 minutes (g/10 min.) ; (b) une distribution des masses moléculaires ($M_w/M_n$) allant de 2,3 à 4,4 ; (c) à la fois (a) et (b) ; (d) une ramification à longue chaîne **caractérisée par** moins de 0,008 ramification à longue chaîne pour 1 000 atomes de carbone ; et (e) à la fois (d) et l'une quelconque de (a) à (c).

**8.** Procédé selon l'une quelconque des revendications 1 à 7, dans lequel le découpage de l'extrudat de LLDPE en granulés ayant des surfaces sans marques de coulée superficielles comprend la granulation de l'extrudat de LLDPE sous l'eau pour fabriquer des granulés de LLDPE sans marques de coulée superficielles.

FIG. 1

FIG. 2

FIG. 3

FIG. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2991508 A
- US 3920782 A
- US 4267146 A
- US 4282177 A
- US 4348349 A
- US 4360494 A
- US 4859398 A
- US 5089200 A
- US 5320798 A
- US 6017991 A
- US 6187397 B
- US 6552129 B
- US 6474969 B1
- US 7632086 B2
- WO 9419168 A
- WO 9308221 A
- US 2005074609 A
- US 9273170 B2
- US 20060173123 A

**Non-patent literature cited in the description**

- *Physics of Fluids,* 01 May 2018, vol. 30 (5